# EUROPEAN PATENT SPECIFICATION

(11) **EP 0 616 174 B1**
(45) Date of publication and mention of the grant of the patent: **17.02.1999**
(21) Application number: 94200705.5
(22) Date of filing: 17.03.1994
(51) Int. Cl.: F24D 11/00

(54) **A device for storing solar energy**
Vorrichtung zum Speichern von Solarenergie
Dispositif de stockage de l'energie solaire

(30) Priority: 17.03.1993 NL 9300476
(43) Date of publication of application: 21.09.1994
(73) Proprietor: AGPO B.V., NL-4825 BD Breda (NL); ZONNE-ENERGIE NEDERLAND B.V., 5504 DG Veldhoven (NL)
(72) Inventor: Van Dam, Johannes, NL-5506 CT Veldhoven (NL); Overman, Paulus Theodorus Jozef, NL-7326 GD Apeldoorn (NL)
(74) Representative: Hoorweg, Petrus Nicolaas

(56) References cited:
- DE-A- 2 914 570
- FR-A- 2 283 404
- GB-A- 2 090 963
- NL-A- 8 102 798
- US-A- 4 269 167
- US-A- 4 503 839
- US-A- 4 574 779

## Description

The invention relates to a device for storing solar energy comprising a buffer tank having connected thereto a fluid circuit consisting of a collector to be placed in sunlight, a tube coil heat exchanger arranged in the buffer tank and a first pipe between collector and exchanger in addition to a second pipe between exchanger and collector, said second pipe containing a controlled fluid pump, wherein in the circuit is arranged a draindown tank situated in the bottom part of the buffer tank, said draindown tank being embodied as a double-walled bottom of the buffer tank.

The fluid in the circuit serves to absorb heat in the collector and subsequently carry it to the buffer tank and transfer the heat to a medium in the buffer tank. This medium can be used for different purposes, for instance as tap water. Such a device is protected in that in the case of overheating for instance the pump is switched off and the fluid can flow out of the collector. Conversely, when the temperature is too cold the pump can likewise be switched off so that the fluid can now also flow out of the collector, whereby the collector is safeguarded against freezing. This drain-back of the fluid out of the collector is made possible by placing a draindown tank in the circuit. Such a device is disclosed in US-A-4,574,779.

The invention has for its object to provide a device with a higher efficiency, which device is distinguished according to the invention in that the partition wall of the double wall protrudes spherically downward into the draindown tank and a level control for the buffer tank is arranged, such that, when the pump stops, the volume of the circuit fluid will be sufficient to contact said spherical partition wall such that a heat transfer takes place via said partition wall, and a debouchment of the tube coil heat exchanger is arranged to the side of the lowest part of the partition wall and is oriented perpendicularly downward.

According to the invention said heat exchanger, which is embodied as tube coil, is arranged in the buffer tank. The internal diameter of the tube can herein be smaller than 18 mm, preferably 15 mm. This provides the guarantee that the tube coil can be vented when the fluid flows back during start-up to the draindown tank via the comparatively narrow tube coil, wherein the air is pushed up to that tank, which contributes to a better heat transfer of the tube coil in the buffer tank. This is particularly the case in a so-called closed circuit of the fluid. Such a circuit can be made completely silent and has the smallest losses when the coil debouches in offset position relative to the centre line of the drainback collector.

Other features and advantages of the invention are further elucidated with reference to two embodiments of the device according to the prior art and the invention. In the drawing:
fig. 1 shows a schematic view of the storage system according to the known art,
fig. 2 shows an upright section of an alternative embodiment of the buffer tank with heat exchanger and draindown tank according to the invention.

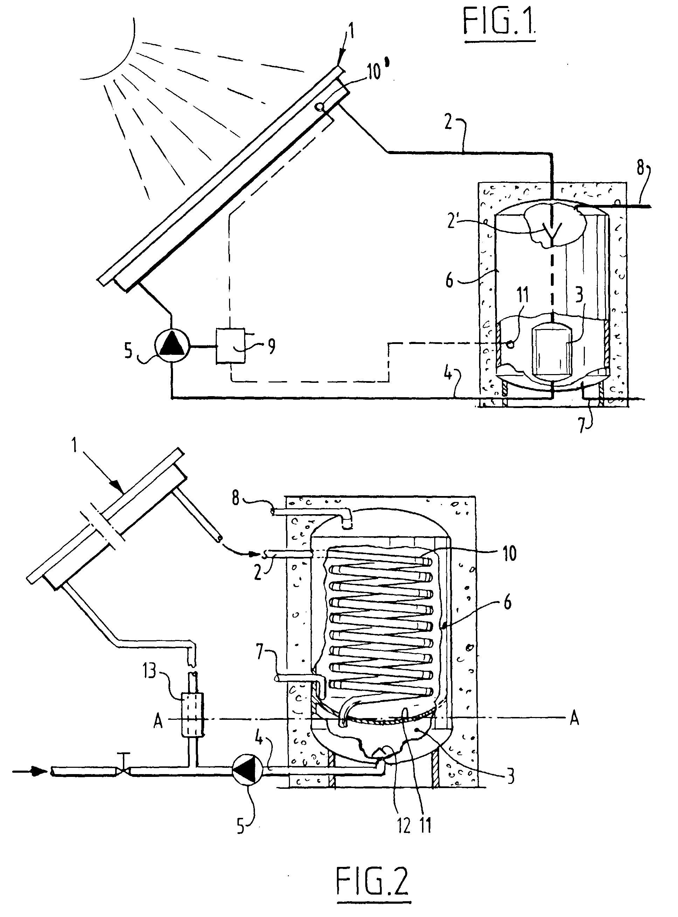

Designated in fig. 1 with the numeral 1 is the collector which is placed such that it can receive sunlight. The collector is connected with a first pipe 2 to a draindown tank 3 which is in turn connected via a second pipe 4 to the underside of collector 1. Pipe 2 usually has an open form at 2' to enable start-up and emptying without air inclusions obstructing the flow. Arranged in drain-back pipe 4 is a fluid pump 5 which circulates the fluid in the above described circuit. The draindown tank is placed in fig. 1 in a buffer tank 6 which is provided with a feed pipe 7 respectively drain pipe 8 in the upper part thereof for the medium for heating.

The pump is controlled by a control circuit 9 which is provided with a temperature sensor 10' on the collector and a temperature sensor 11 in the buffer tank.

According to the prior art the draindown tank 3 is arranged in the bottom part of the buffer tank. The heat which is absorbed into the collector by the fluid can thus be relinquished in the draindown tank 3 directly to the medium in buffer tank 6.

In the case the pump is stopped due to too high temperature or too low temperature in collector 1, all the fluid can drain back into draindown tank 3, wherein the heat absorbed in the meantime can all be relinquished to the medium in buffer tank 6. Due to the low placing the largest jump in temperature takes place here, whereby the heat transfer is maximal.

Fig. 2 shows a closed circuit embodiment of the buffer tank 6 according to the invention which is provided with a spiral-shaped tube coil 10 with relatively large spirals, which is connected on one side to the first pipe 2 of the collector and on the other side to the draindown tank 3 arranged on the underside of tank 6. This draindown tank 3 is coupled to the drain-back pipe 4 with pump 5 to collector 1.

The heat of the heated fluid in the collector is relinquished via tube coil 10 to the medium in tank 6. Should the pump 5 be stopped due to too high or too low temperature in the collector the fluid then all flows back into draindown tank 3. The residual heat stored therein can be relinquished via the partition or bottom wall 11 of tank 6 since this part is again the coldest zone of the tank. This wall is spherical so that a rapid contact with the fluid takes place as the buffer tank fills up.

Making the passage of the tube coil small ensures that during start-up the downward flowing fluid pushes the air in tube coil 10 downward into the draindown tank so that an optimum heat transfer from the tube coil is ensured.

In order to reduce the noise nuisance the debouchment of tube coil 10 is placed adjacent the lowest point of the wall 11 and the tube end of coil 10 points perpendicularly downward, thereby resulting in a smooth flow without splashing.

Placed over the inlet to tube 4 is a flow regulating member, for instance a cover 12 to prevent eddy formation (which can generate noise).

The pipe 4 is also provided with a level control 13 with which the correct filling of the fluid circuit can be adjusted. When the pump stops the level will again return to A-A at which the fluid is in contact with the spherical bottom 11.

It may also be noted herein that the buffer tank 6 can moreover be provided with an extra heating device, for instance a gas burner, electrical element or additional heat exchanger (not shown).

## Claims

1. Device for storing solar energy comprising a buffer tank (6) having connected thereto a fluid circuit consisting of a collector (1) to be placed in sunlight, a tube coil heat exchanger (10) arranged in the buffer tank (6) and a first pipe (2) between collector and exchanger in addition to a second pipe (4) between exchanger and collector, said second pipe containing a controlled fluid pump (5), wherein in the circuit is arranged a draindown tank (3) situated in the bottom part of the buffer tank (6), said draindown tank (3) being embodied as a double-walled bottom (11) of the buffer tank, **characterized in that** the partition wall of the double wall protrudes spherically downward into the draindown tank and a level control (13) for the buffer tank is arranged, such that, when the pump (5) stops, the volume of the circuit fluid will be sufficient to contact said spherical partition wall such that a heat transfer takes place via said partition wall, and a debouchment of the tube coil heat exchanger (10) is arranged to the side of the lowest part of the partition wall (11) and is oriented perpendicularly downward.

2. Device as claimed in claim 1, **characterized in that** the internal diameter of the tube is smaller than 18 mm, preferably 15 mm.

3. Device as claimed in any of the foregoing claims, **characterized in that** a flow regulating member is placed over the mouth of the second pipe (4).

4. Device as claimed in any of the foregoing claims, **characterized in that** the buffer tank is provided with an additional heating member.

## Patentansprüche

1. Vorrichtung zum Speichern von Solarenergie mit einem Puffertank (6), an den ein Flüssigkeitskreis angeschlossen ist, der einen im Sonnenlicht aufzustellenden Kollektor (1), einen Rohrspulen-Wärmeaustauscher (10) im Puffertank (6) und ein erstes Rohr (2) zwischen Kollektor und Wärmeaustauscher zusätzlich zu einem zweiten Rohr (4) zwischen Wärmeaustauscher und Kollektor aufweist, wobei das zweite Rohr eine steuerbare Flüssigkeitspumpe (5) aufweist und wobei in dem Kreis ein Abzugstank (3) im Bodenteil des Puffertanks (6) angeordnet ist, welcher Abzugstank (3) als doppelwandiger Boden (11) des Puffertanks ausgebildet ist,
dadurch gekennzeichnet, daß die Unterteilungswand des doppelwandigen Bodens sphärisch nach unten in den Abzugstank einsteht und ein Pegelsteuergerät (13) für den Puffer-, tank derart angeordnet ist, daß beim Stillsetzen der Pumpe (5) das Volumen der Flüssigkeit im Kreis ausreicht, um die sphärische Unterteilungswand derart zu berühren, daß eine Wärmeübertragung über die Unterteilungswand stattfindet, und daß eine Mündung des Rohrspulen-Wärmeaustauschers (10) seitlich zum tiefsten Punkt der Unterteilungswand (11) vorgesehen und senkrecht nach unten gerichtet ist.

2. Vorrichtung nach Anspruch 1,
dadurch gekennzeichnet, daß der Innendurchmesser des Rohres kleiner als 18 mm ist und vorzugsweise 15 mm beträgt.

3. Vorrichtung nach einem der vorhergehenden Ansprüche,
dadurch gekennzeichnet, daß ein Strömungsregler über der Mündung des zweiten Rohres (4) angeordnet ist.

4. Vorrichtung nach einem der vorhergehenden Ansprüche,
dadurch gekennzeichnet, daß der Puffertank mit einer zusätzlichen Heizeinrichtung ausgestattet ist.

## Revendications

1. Dispositif pour stocker de l'énergie solaire comprenant un réservoir tampon (6) comportant, raccordé à ce dernier, un circuit de fluide comprenant un collecteur (1) destiné à être placé à la lumière du soleil. un échangeur de chaleur (10) à serpentin agencé dans le réservoir tampon (6) et un premier conduit (2) entre le collecteur et l'échangeur s'ajoutant à un second conduit (4) entre l'échangeur et le collecteur, le second conduit contenant une pompe de fluide commandée, dans lequel un réservoir (3) de drainage vers le bas est agencé dans le circuit, ce réservoir de drainage vers le bas étant placé dans la partie du fond du réservoir tampon (6), le réservoir (3) de drainage vers le bas se présentant sous la forme d'un fond (11) à double paroi du réservoir tampon, **caractérisé en ce que** la paroi de séparation de la double paroi fait saillie de façon sphérique vers le bas dans le réservoir de drainage vers le bas et une commande de niveau (13) pour le réservoir tampon est agencée, de telle manière que, lorsque la pompe (5) s'arrête, le volume du fluide de circuit est alors suffisant pour être en contact avec la paroi de séparation sphérique si bien qu'un transfert de chaleur a lieu par l'intermédiaire de la paroi de séparation , et un débouché de l'échangeur de chaleur (10) à serpentin est agencé dans le côté de la partie la plus basse de la paroi de séparation (1) et est orienté perpendiculairement vers le bas.

2. Dispositif selon la revendication 1, **caractérisé en ce que** le diamètre interne du tube est inférieur à 18 mm, de préférence à 15 mm.

3. Dispositif selon l'une quelconque des revendications précédentes, **caractérisé en ce qu'** un organe de régulation de débit est placé au dessus de la bouche du second conduit (4).

4. Dispositif selon l'une quelconque des revendications précédentes, **caractérisé en ce que** le tampon est muni d'un organe de chauffage supplémentaire.
